# EUROPEAN PATENT APPLICATION

(11) **EP 4 372 512 A1**
(43) Date of publication of application: **22.05.2024**
(21) Application number: 22208594.6
(22) Date of filing: 21.11.2022
(51) Int. Cl.: G05D 1/02

(54) **ROBOTIC MOWER, SYSTEM AND METHOD FOR NAVIGATING A ROBOTIC MOWER**

(71) Applicant: SMAUT Technology s.r.o., 198 00 Praha (CZ)
(72) Inventor: Sopik, Vincenc, 79001 Jeseník (CZ)
(74) Representative: Klickow & Wetzel PartGmbB

(57) **Abstract**

The invention relates to a robotic mower, a system and a method for navigation a robotic mower wherein a two-dimensional working path is calculated for the robotic mower. According to the invention positioning errors caused by an inclination of the robotic mower due to slopes in the work area are compensated to maintain a high-accuracy of the positioning.

## Description

The invention relates to a robotic mower designed for mowing the vegetation on a work aera.

Further the invention relates to a system for navigating a robotic mower.

Furthermore, the invention relates to a method for navigating a robotic mower.

The automatic or autonomous navigation of robotic mowers on a work area is already known in general. For example, robotic mowers are designed to follow a precalculated working path or to randomly move over the surface of the work area.

When a very high accuracy of the positioning of a robotic mower in the range of centimeters is required, not only the specific capabilities of the positioning system, for example a GNSS, but also the topology of the terrain of the work area have significant influences on the achievable overall positioning accuracy.

Therefore, for example systems using three dimensional (3D) maps of the work area are being used.

Nevertheless, the use of 3D maps and the processing of the corresponding 3D data requires significantly higher processing resources compared to systems working with two dimensional (2D) maps and data.

It is an object of the invention to provide a robotic mower with a high positioning accuracy using two-dimensional navigation data.

This object is solved by a robotic mower according to claim 1.

It is another object of the invention to provide a system for navigation at least one robotic mower with a high positioning accuracy using two-dimensional navigation data.

This object is solved by a system for navigating at least one robotic mower according to claim 8.

Another object of the invention is to provide a method for navigation at least one robotic mower with a high positioning accuracy using two-dimensional navigation data.

This object is solved by a method for navigating at least one robotic mower according to claim 9.

In the dependent claims advantageous embodiments of the invention are claimed.

The following disclosed features of a robotic mower, a system for navigating at least one robotic mower and a method for navigating at least one robotic mower are part of the invention in all practicable combinations.

Typically, the position of the center of a robotic mower is the relevant point used for the positioning of the robotic mower, for example a robotic mower is controlled to stay on a precalculated working path with its center. Nevertheless, any other point of a robotic mower can be taken into account as the basis for the navigation if the respective impact on the system is considered.

Positioning systems like for example global navigation satellite systems (GNSS) are designed to determine the position of a GNSS module. Accordingly, robotic mowers are equipped with at least one GNSS module to determine the position of the robotic mower. In common set-ups the GNSS module will be mounted on the robotic mower in a certain height above the ground, over which the robotic mower is travelling during a mowing operation. As long as the surface of the work area is completely flat, the GNSS module is permanently located at the same position relative to the center of the robotic mower over the ground in a top view, which is the relevant view considering a 2D map and 2D navigation data for navigating the robotic mower.

As soon as the terrain of the work area comprises slopes causing an inclination of the robotic mower in any direction, the GNSS module is moved relative to the center of the robotic mower over the ground due to its height above the ground observed from top view. Therefore, the detected position of the GNSS module does not exactly correspond with the predefined 2D working path anymore, so that the robotic mower is not able to exactly follow the working path anymore.

According to the invention this problem is solved by calculating and applying correction data to compensate the inclination dependent shift of the position of the localization module (e.g. the GNSS module), or the at least one antenna of the localization module.

A robotic mower according to the invention comprises at least a chassis to carry the remaining parts of the robotic mower, a drive system to drive the robotic mower over ground, a mowing unit for mowing vegetation, a control unit to control the drive unit to follow a predefined two-dimensional working path, a localization module to determine the position of the robotic mower and at least one inclination sensor for determining the inclination of the robotic mower along at least one axis.

The robotic mower has a longitudinal axis extending from the back to the front of the robotic mower, a transversal axis orthogonal to the transversal axis extending from the left side to the right side of the robotic mower and a vertical axis orthogonal to the other two axes extending from the bottom to the top of the robotic mower. The axes cross in the center of the robotic mower.

In embodiments of the invention the localization module is positioned at some point along the vertical axis of the robotic mower (top view center). Alternatively, the distance of the position determined with the localization module to the vertical axis (top view center) is known and compensated for controlling the robotic mower in embodiments of the invention.

In preferred embodiments of the invention the localization module is designed to work in a high-accuracy GNSS like DGNSS or SBAS GNSS for example, allowing to determine the position in a range of less than 5cm, preferred equal or less than 1 cm.

The inclination data along an axis means the inclination of the vertical axis of the robotic mower in the direction of the corresponding axis and is determined as the angle of the deflection of the vertical axis of the robotic mower in the corresponding direction out of the horizontal position of the robotic mower without any inclination (normal position).

In embodiments of the invention the control unit is designed to evaluate the inclination data of the at least one inclination sensor, to determine the shift of the position of the localization module over ground in dependency of the determined inclination and to calculate correction data for the position of the robotic mower. This position correction data is usable to compensate the positioning error caused by the inclination of the robotic mower elsewise and to control the drive unit accordingly.

In advantageous embodiments of the invention the control unit is designed to calculate and use the position correction data in real-time.

In embodiments of the invention the robotic mower comprises a communication unit to communicate with an external server which is designed to control and/or monitor the robotic mower at least during a mowing operation.

In embodiments of the invention the robotic mower is designed to determine its position with the help of the localization module and to send the position data to the server.

In embodiments of the invention the robotic mower is designed to send the determined inclination data to the server and to receive the position correction data from the server, so that the drive unit can be controlled accordingly.

The correction data for each axis supported by the corresponding inclination sensor(s) is calculated by determining the shift of the localization module out of the normal position (without any inclination).

Therefore, the tangent of the determined angle of deflection of the vertical axis of the robotic mower in the corresponding direction is determined and multiplied with the height of the localization module over the ground in normal position. The result of this equation is the shift in the corresponding direction which has to be compensated to determine the exact position of the robotic mower over ground.

In embodiments of the invention the robotic mower comprises inclination sensors to determine the inclination along at least two orthogonal axes, wherein in preferred embodiments of the invention one axis is the transversal axis of the robotic mower and one axis is the longitudinal axis of the robotic mower.

In embodiments of the invention the robotic mower comprises inclination sensors to determine the inclination along at least four axes in the plane spanned by the longitudinal and the transversal axes of the robotic mower.

In embodiments of the invention the robotic mower comprises inclination sensors to determine the inclination along eight axes equally distributed in the plane spanned by the longitudinal and the transversal axes of the robotic mower.

In embodiments of the invention the communication unit of the robotic mower is designed to communicate with a local correction station to realize a high-accuracy GNSS in combination with the GNSS.

A system for navigating at least one robotic mower according to the invention comprises at least one server and at least one robotic mower.

The server is designed to control and monitor the at least one robotic mower at least during a mowing operation and to calculate a two-dimensional working path for the at least one robotic mower based on a two-dimensional map of the work area (top-view map).

The server is designed to assign and to send the calculated working path to a robotic mower.

Further, the server is designed to receive the position data and the inclination data of the at least one robotic mower during a mowing operation, to calculate correction data based on these data and to send the correction data to the corresponding robotic mower.

The server is designed to perform the calculation and transfer of the correction data in real-time to enable a real-time compensation of positioning errors caused by an inclination of the robotic mower. Therefore, the position data and inclination data as well as the correction data is updated at least several times per second.

The robotic mower of the system according to the invention is designed according to the description above.

A method for navigating at least one robotic mower according to the invention comprises at least the following steps:
- Determining the two-dimensional position of a robotic mower on a work area with a localization module mounted on the robotic mower,
- Determining the inclination of the robotic mower at the determined position,
- Determining the shift of the localization module out of the normal position over ground caused by an inclination of the robotic mower,
- Calculating position correction data,
- Applying the calculated position correction data on the determined position data to achieve corrected position data.

In embodiments of the method according to the invention the corrected position data of the robotic mower is used to control the robotic mower on a precalculated working path.

In embodiments of the invention the correction data is determined by calculating the tangent of the determined angle of deflection of the vertical axis of the robotic mower in the corresponding direction and multiplying the tangent with the height of the localization module over the ground in normal position. The result of this equation is the shift in the corresponding direction which has to be compensated by subtracting the shift from the determined apparent position to determine the exact position of the robotic mower over ground.

In embodiments of the method according to the invention the inclination of the robotic mower is being determined along at least two axes, in preferred embodiments the inclination is being determined along at least four axes, in especially preferred embodiments of the invention the inclination is being determined along at least eight axes.

In preferred embodiments of the invention the axes along which the inclination is measured are in the plane spanned by the longitudinal and the transversal axes of the robotic mower.

In embodiments of the invention the position and inclination data of at least one robotic mower is being sent to a server, the position correction data is calculated on the server and being sent to the corresponding robotic mower.

In preferred embodiments of the method according to the invention a robotic mower and/or as system according to the invention is/are used.

In embodiments of the invention the inclination data gathered by at least one robotic mower is recorded and linked to the according positions of the 2D map of the work area and a 3D map of the work area is being generated out of these data sets.

In other embodiments of the invention the teaching according to the invention is applied to applications other than mowing. Therefore, the teaching according to the invention may be used for example for robots designed for cleaning, vacuuming, snow removal, solar panel cleaning, construction, plowing, harvesting or other agricultural machines, for example for the work in vineyards or orchards.

The drawings described hereinafter show exemplary embodiments of the invention. They show:
- Figure 1:: A schematic illustration of a system according to the invention and
- Figure 2:: A schematic illustration of a robotic mower according to the invention.

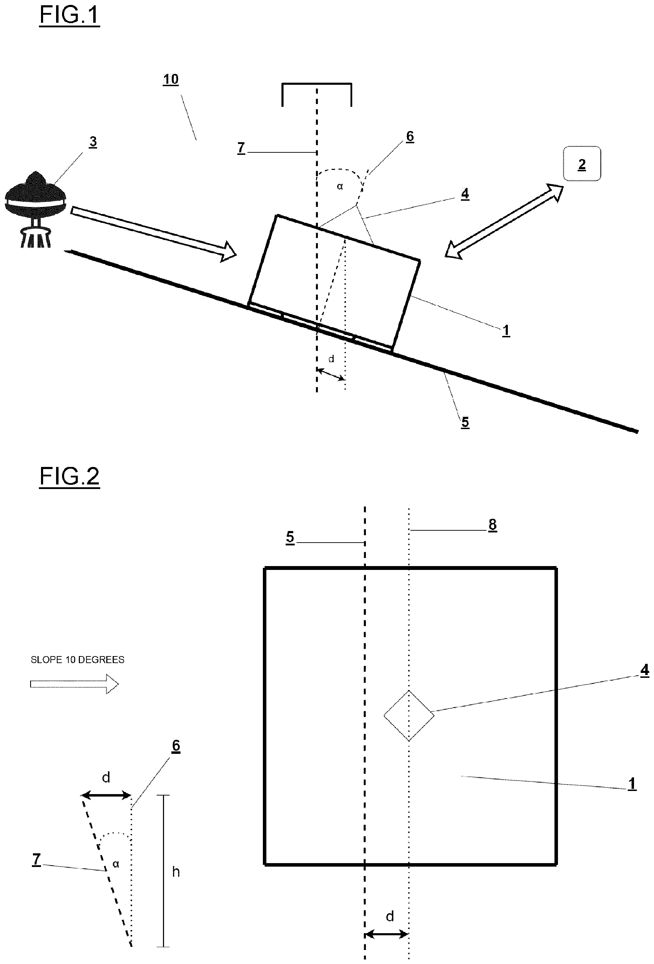

Figure 1 shows a schematic illustration of a system (10) for navigating at least one robotic mower (1) according to the invention in a side view. The system (1) comprises one robotic mower (1), a server (2) and a GNSS (3) used for determining the position of the robotic mower (1). Therefore, the robotic mower (1) is equipped with a localization module (4) realized by a GNSS module. The localization module (4) is mounted on the robotic mower (1) in a certain height above the ground.

The robotic mower (1) is travelling along a working path (5), wherein the surface along the working path (5) is sloped.

The slope causes an inclination of the robotic mower (1) resulting in a deflection by the angle α of the vertical axis (6) of the robotic mower (1) out of the normal position (7). This leads to a shift d of the localization module (4) in the direction of the slope.

Therefore, the position determined by the GNSS (3) does not correspond with the position of the center of the robotic mower over the ground anymore and an apparent position shifted by the distance d is assumed as long as this inclination dependent error is not compensated. The system (10) according to the invention solves this problem by calculation position correction data and applying this correction data on the determined apparent location to determine the real location of the robotic mower (1).

Figure 2 shows a schematic illustration of a robotic mower (1) according to the invention in a top view.

The robotic mower (1) is equipped with a localization module (4) that is mounted in the center of the robotic mower (1) with respect to the longitudinal and horizontal axes.

The robotic mower (1) is operating on a surface with a slope of 10 degrees descending to the right.

The precalculated working path (5) is shown with the dashed line. With the central localization module (4) the robotic mower (1) is controlled such that the determined position of the localization module (4), more precisely the reference position given by the determined position of the localization module (4), is kept on the precalculated working path (5) during operation.

Th vertical axis (6) of the robotic mower (1) is deflected by the angle α out of the normal position (7). The localization module (4), more precisely the reference position given by the determined position of the localization module (4), is in a height h above the ground in normal position.

The height h is about 100 cm in this example, but may vary in other embodiments of the invention.

Due to the slope of the surface along the precalculated working path (5) the robotic mower (1) gets inclined such that the localization module (4) is shifted in the direction of the slope. Thus, the determined position of the robotic mower (1) does not correspond with the location of the center of the robotic mower (1) over the ground, but is shifted by the distance d.

Without a correction of the position data the determined position of the robotic mower (1) lies on the apparent positioning path (8), which would result in a false control of the robotic mower (1) to drive it back on the precalculated working path (8) actually resulting in a working path slope upwards shifted by the distance d under the assumption of a steady slope.

Applying the calculated position correction data on the position determined with the localization module allows to determine the exact current position of the robotic mower (1) required to actually control it on the precalculated working path (5).

For the given slope of 10° in this example resulting in a deflection of the vertical axis (6) of the robotic mower (1) the position correction data is calculated as tan (10°) x 100 cm resulting in 17.6 cm as the shift d to be subtracted from the corresponding direction coordinate of the determined position.

## Claims

1. Robotic mower (1) comprising at least a chassis to carry the remaining parts of the robotic mower (1), a drive system to drive the robotic mower (1) over ground, a mowing unit, a control unit to control the drive unit to follow a predefined two-dimensional working path, a localization module (4) to determine the position of the robotic mower (1) **characterized in that** the robotic mower (1) comprises at least one inclination sensor for determining the inclination of the robotic mower (1) along at least one axis.

2. Robotic mower (1) according to claim 1, **characterized in that**, the control unit is designed to evaluate the inclination data of the at least one inclination sensor, to determine the shift of the position of the localization module (4) over ground in dependency of the determined inclination and to calculate correction data for the position of the robotic mower (1), wherein this position correction data is usable to compensate the positioning error caused by the inclination of the robotic mower (1) and to control the drive unit accordingly.

3. Robotic mower (1) according to claim 2, **characterized in that**, the control unit is designed to calculate and use the position correction data in real-time.

4. Robotic mower (1) according to one of the claims 1 to 3, **characterized in that**, the robotic mower (1) comprises a communication unit to communicate with an external server (2) which is designed to control and/or monitor the robotic mower (1) at least during a mowing operation and the robotic mower (1) is designed to determine its position with the help of the localization module (4) and to send the position data to the server (2) and the robotic mower (1) is designed to send the determined inclination data to the server (2) and to receive the position correction data from the server (2), so that the drive unit can be controlled accordingly.

5. Robotic mower (1) according to one of the claims 1 to 4, **characterized in that**, the correction data for each axis supported by the corresponding inclination sensor(s) is calculated by determining the shift d of the localization module (4) out of the normal position without any inclination by calculating the tangent of the determined angle α of deflection of the vertical axis (6) of the robotic mower (1) in the corresponding direction and multiplying with the height h of the localization module (4) over the ground in normal position.

6. Robotic mower (1) according to one of the claims 1 to 5, **characterized in that**, the robotic mower (1) comprises inclination sensors to determine the inclination along at least two orthogonal axes in the plane spanned by the longitudinal and the transversal axes of the robotic mower (1).

7. Robotic mower (1) according to claim 6, **characterized in that**, the robotic mower (1) comprises inclination sensors to determine the inclination along at least four axes in the plane spanned by the longitudinal and the transversal axes of the robotic mower (1).

8. System (10) for navigating at least one robotic mower (1) comprising a server (2) and at least one robotic mower (1) according to the claims 1 to 7, wherein the server (2) is designed to control and monitor the at least one robotic mower (1) at least during a mowing operation and to calculate a two-dimensional working path (5) for the at least one robotic mower (1) based on a two-dimensional map of the work area and wherein the server (2) is designed to assign and to send the calculated working path (5) to a robotic mower (1) and wherein the server (2) is designed to receive the position data and the inclination data of the at least one robotic mower (1) during a mowing operation, to calculate correction data based on these data and to send the correction data to the corresponding robotic mower (1).

9. Method for navigating at least one robotic mower (1) comprising the steps:
a. Determining the two-dimensional position of a robotic mower (1) on a work area with a localization module (4) mounted on the robotic mower (1),
b. Determining the inclination of the robotic mower (1) at the determined position,
c. Determining the shift of the localization module (4) out of the normal position over ground caused by an inclination of the robotic mower (1),
d. Calculating position correction data,
e. Applying the calculated position correction data on the determined position data to achieve corrected position data.

10. Method according to claim 9, **characterized in that**, the corrected position data of the robotic mower (1) is used to control the robotic mower (1) on a precalculated working path (5).

11. Method according to one of the claims 9 and 10, **characterized in that**, the correction data is determined by calculating the tangent of the determined angle αof deflection of the vertical axis (6) of the robotic mower (1) in the corresponding direction and multiplying the tangent with the height h of the localization module (4) over the ground in normal position.

12. Method according to one of the claims 9 to 11, **characterized in that**, the inclination of the robotic mower (1) is being determined along at least two axes and used to correct the determined position accordingly.

13. Method according to one of the claims 9 to 12, **characterized in that**, the determined position data and inclination data is being sent from the robotic mower (1) to a server (2) and position correction data is calculated on the server (2) and being sent to the robotic mower (1).

14. Method according to one of the claims 9 to 13, **characterized in that**, a robotic mower (1) according to one of the claims 1 to 7 is used.

15. Method according to one of the claims 9 to 14, **characterized in that**, a system (1) according to claim 8 is used.
